# EUROPEAN PATENT SPECIFICATION

(11) **EP 4 175 895 B1**
(45) Date of publication and mention of the grant of the patent: **11.06.2025**
(21) Application number: 21739372.7
(22) Date of filing: 05.07.2021
(51) Int. Cl.: B65D 51/28, B65D 81/32

(54) **PROCESS OF INJECTION BLOW MOLDING OF A RECIPIENT**
BLASFORMVERFAHREN EINES BEHÄLTERS
PROCÉDÉ DE MOULAGE PAR SOUFFLAGE D'UN RÉCIPIENT

(30) Priority: 06.07.2020 LU 101902; 30.11.2020 US 202017107214
(43) Date of publication of application: 10.05.2023
(73) Proprietor: Wallbox Packaging, 7321 Blaton (BE)
(72) Inventor: GUÉRY, Jean Claude, 5100 WIERDE (BE); HERLIN, Corinne, 67000 STRASBOURG (FR)
(74) Representative: Patent 42
(86) International application number: PCT/EP2021/068493
(87) International publication number: WO 2022/008431

(56) References cited:
- WO-A1-2012/117281
- WO-A1-2018/138186
- US-A1- 2007 119 727
- US-A1- 2014 305 817

## Description

### Technical Field

The disclosure relates to the area of recipients adapted to dispense a product such as a liquid or a powder in a container containing a liquid product; and/or of recipients adapted to contain a liquid product and to receive a product such as a liquid or a powder from a cartridge. More particularly, the disclosure relates to a recipient which can be used with a container and/or a cartridge allowing a solution to be prepared *in situ.*

### Technical Background

Food or non-food formulations in the form of powder or fluid are very widespread. Said formulations must be stored and prepared under strict conditions of hygiene or safety. Formulations in the form of powder or fluid can be arranged in packaging separated from the contents in which they will subsequently be diluted or dispersed. For example, the formulation can be arranged in sealed packaging, said packaging being opened to release the powder or the fluid into a container such as a bottle. Said handling is generally carried out by the end-user and implies a risk of contamination of the water or the formulation.

Devices or containers comprising an independent reservoir for storing a formulation are known.

US2005/161348 describes a capsule that comprises a lower cap with a security strip that inserts removably into the mouth of a bottle. The upper part of the lower cap is open and provided with a neck that couples with an upper cap, also having a security strip. A reservoir is comprised within the upper cap and has a breakable bottom; the reservoir also internally comprises a cutter. The upper cap can move axially downwards with respect to the neck and the bottle, while it is prevented from moving upwards. The capsule also includes anchoring between the reservoir and the neck of the capsule when the reservoir is inserted in the neck. The process comprises a stage of filling the bottle with fizzy water, a stage of hermetically closing the bottle with a capsule containing substances to be added to the fizzy water, and a stage of introducing the substances into the fizzy water before consuming the drink.

US2011/0226770 describes a closure that is closed at its outer end and allows a fluid product to be distributed in a bottle. Problems may arise when the recipient needs to cooperate with the neck of the container, in particular when the neck of the containers shows different formats, such as different diameters or different lengths.

Both EP2785305 and WO2018/138186 describe a recipient which is suitable to cooperate with the neck of a container to allow a product contained in the recipient to flow out into said container. In WO2018/138186, the recipient includes at least one reservoir; moveable sealing means to close the opening of the reservoir, and a socket wherein the moveable sealing means comprises at least one ring configured to cooperate with the neck of the container to allow the moveable sealing means to slide along the lower wall of the reservoir when the neck of the container exerts a pressure on said ring causing the opening of the one or more flaps. The moveable sealing means with one or more rings allows the recipient to adapt to the neck of containers showing different formats, such as different diameters or different lengths. For that purpose, at least one ring of the moveable sealing means comprises holding lugs configured to cooperate with an internal relief of the socket to maintain the moveable sealing means in position inside the socket, closing the opening of the reservoir.

The known recipients are interesting but there is still a need for more flexibility and adaptability in the shape and volume of the reservoir.

US2007/0119727 discloses a bottle capable of storing or mixing two or more different materials. The bottle results from the combination of a general bottle body with a mixing means including an openable additive container. The bottle body may be separated from the additive container so that different materials can be separately stored and then combined with each other upon use.

US5564600 discloses a device for keeping two products in respective containers separate from one another, and for mixing them when desired for use. A seal including a sealing plate is connected to one of the containers, and a closure partition equipped with a seat is connected to the other of the containers. In a closed position, the sealing plate seals against the seat, but a relative translational displacement of the two containers moves the plate away from the seat, opens the seal, increases the internal volume of the assembly of the two containers, and allows the products to mix.

There is still a need for a device that is suitable to be mounted on a container to allow a solution to be prepared *in situ* by mixing a product contained in the device, for example, a fluid or a powder, with a liquid contained in the container and that shows flexibility in the choice of the reservoir so that it can be adapted to reservoirs of different diameters, different volumes, different constituting materials or different shapes while keeping good performance in the seal of the assembly. There is also a need for containers that can be used with simple and cost-effective cartridges. There is still a need for a recipient that can be used with containers that show different formats, such as different diameters or different lengths. There is still a need for a recipient that is easy and cheap to produce. There is still a need for a device that solves, at least in part, one or several of the aforesaid problems of the known devices.

### Summary

According to a first aspect, the disclosure provides for a process of injection blow molding or injection stretch blow molding of an article; the process comprising a step of injection molding of a preform on a core pin followed by a step of blow molding or stretch blow molding of said preform; the process is remarkable in that the recipient; said recipient is a blow-molded article comprising:
- a reservoir, the reservoir having a bottom wall comprising an opening;
- a central element arranged at the opening of the reservoir;
- a socket arranged to surround the central element;

and in that both the socket and the central element show a lower end and an upper end, and are connected by their respective upper ends by means of a disc with a central aperture, wherein the assembly comprising the socket, the central element and the disc is forming a ring that comes into one piece; in that at least a part of the bottom wall of the reservoir is arranged to face the disc and in that the ring and the reservoir also come into one piece so that the reservoir is irreversibly fixed to the ring;
wherein the socket shows an internal relief being an internal thread; and in that the step of blow molding or stretch blow molding of the preform is followed by a step of unscrewing the article from the core pin performed before a step of ejection of said article;
and wherein the reservoir has a single opening being the opening of the bottom wall.

From the definition given, it is understood that the disclosure provides a recipient that is easy to cost-effectively produce. The recipient body comprises a reservoir and a ring that are irreversibly fixed to each other so that the seal of the assembly is preserved. The recipient is remarkable in that it provides in a single piece a reservoir and means to cooperate with a container or a cartridge for *in situ* mixing. Further advantages and technical effects are found in the following embodiments that may be combined in any suitable manner.

In a preferred embodiment, at least a part of the bottom wall of the reservoir is irreversibly fixed to the ring by welding on the upper face of the disc so that the recipient shows a weld line on its outer surface. After injection, the reservoir is blown into the mold (i.e. is blow molded) and welds to the ring due to the high temperature of the plastic. This process takes place in the mold in one step.

It is understood that the disc has an upper face and at least a part of the bottom wall of the reservoir arranged to face the disc is irreversibly fixed to the ring by welding on the upper face of the disc.

Since, the ring and the reservoir also come into one piece it is understood that the ring and at least the bottom wall of the reservoir come into one piece.

With preference, the recipient comprises a ring and a reservoir and the process comprise a step of welding of the reservoir to the ring and in that the step of blow molding or stretch blow molding the preform to form an article and the step of welding of the reservoir to the ring are done simultaneously

In others words, the steps of blowing the reservoir and welding of the reservoir to the ring are done simultaneously.

In a preferred embodiment, the ring shows one or more holding reliefs.

According to the disclosure, the one or more holding reliefs are different from an internal relief of the socket being an internal thread.

For example, the outer surface of the central element is facing at least one internal relief of the socket and wherein the at least one internal relief of the socket is different from the one or more holding reliefs of the ring.

The recipient is a blow molded article selected from an injection blow molded article or an injection stretch blow molded article.

For example, the ring shows one or more holding reliefs; wherein the one or more holding reliefs are selected from one or more flats on the outer surface of the socket; one or more grooves or ribs extending along the length of the socket and placed on the outer surface of the socket; one or more lugs on the inner surface of the tube when the central element is a tube; one or more grooves or ribs extending along the length of the tube and placed on the inner surface of the tube when the central element is a tube; one or more notches in the thickness of the lower end of the socket and/or in the thickness of the lower end of the tube when the central element is a tube, a crenellation of the lower end of the socket and/or of the lower end of the tube when the central element is a tube.

The presence of the one or more holding reliefs is advantageous to the unscrewing and demolding with ejection of the article automatically and industrially, in particular when the article is a blow molded article selected from an injection blow molded article or an injection stretch blow molded article, wherein the socket the in shows an internal relief being internal thread.

In an embodiment, the reservoir has a wall thickness of at most 1.0 mm; preferably at most 0.9 mm; more preferably at most 0.8 mm.

For example, at least a part of the reservoir or the whole reservoir is surrounded by a housing made of one or more materials that can be the same or different from the material constituting the ring. With preference, the one or more materials of the housing are selected from plastic material, metal, wood, glass, cardboard, paper or any mixture thereof. The housing can be glued or not glued to the reservoir and/or to the ring.

For example, the central element is a tube and the lower end of the tube shows a beveled or twisted shape so that the tube shows a variation in length. Alternatively, the central element is a tube and the lower end of the tube is straight so that the tube shows no variation in length. For example, the reservoir is dimensioned to have a width greater than the diameter of the opening; with preference, the width of the reservoir is at least 1.1 times greater than the diameter of the opening; preferably at least 1.5.

For example, the ring and the reservoir are made of plastic material being a thermoplastic material selected from polyethylene, polypropylene, polystyrene, polylactide and any mixture thereof, or is made of plastic material being one or more polyester, preferably polyethylene terephthalate.

For example, the ring and/or at least a part of the reservoir is made of a plastic material comprising at least 30 wt.% of post-consumer resin based on the total weight of the plastic material; with preference, at least 50 wt.%; or at least 60 wt.%; or is entirely made of post-consumer resin.

The socket shows an internal relief being an internal thread that can be continuous or discontinuous.

For example, the disc has a lower face arranged internally to the ring and the lower face of the disc shows one or more securing means, or a sealing washer is fixed to the lower face of the disc.

For example, the central element is a tube, and the recipient further comprises sealing means arranged to close the tube at its lower end so that the product contained in the recipient is stored in both the reservoir and the tube.

For example, the recipient is a cartridge that is suitable to cooperate with the neck of a container to allow a product contained in the recipient to flow out into said container; the recipient is remarkable in that the central element is a tube and the recipient further comprises moveable sealing means arranged to close the tube at its lower end, the moveable sealing means comprising a cylindrical body with a higher and a lower aperture, and one or more flaps closing the lower aperture of the cylindrical body, wherein said cylindrical body is dimensioned to surround the tube and to slide along it between a closing and an opening position, wherein in the opening position the one or more flaps are opened by the pressure exerted by the tube on said flaps; with preference, one or more flaps are linked to the cylindrical body. For example, all the one or more flaps are linked to the cylindrical body.

The socket shows an internal relief and, for example, the moveable sealing means comprises at least one collar arranged on the external side of the cylindrical body and configured to cooperate with the neck of the container to allow the moveable sealing means to slide along the tube by a pressure exerted on said collar by the neck of the container causing the opening of the one or more flaps and at least one collar of the moveable sealing means comprises holding lugs configured to cooperate with the internal relief of the socket to maintain the moveable sealing means in position inside the socket, closing the tube.

For example, the movable sealing means comprises two collars distributed along the cylindrical body to show a lower collar and an upper collar wherein the lower collar is the one arranged to cooperate with the neck of the container and/or wherein the upper collar of the moveable sealing means comprises holding lugs configured to cooperate with an internal thread of the socket to maintain the moveable sealing means in position inside the socket, closing the tube.

For example; the socket shows a lower aperture dimensioned to receive the neck of the container, wherein the lower aperture has an internal diameter greater than the external diameter of the one or more collars of the movable sealing means.

For example, the lower end of the tube shows a beveled or twisted shape so that the tube shows a variation in length. Alternatively, the central element is a tube and the lower end of the tube is straight so that the tube shows no variation in length

For example, the moveable sealing means comprise one flap or a plurality of flaps, each flap having at least one side in common with an adjacent flap and whose distal end forms a junction point or a junction line to said plurality of flaps and the lower end of the tube is arranged to exert a pressure on the proximal end on the flaps to open them when the moveable sealing means slide along the tube.

For example, the moveable sealing means comprise a single flap, wherein the flap is connected to the cylindrical body or to a collar by a frangible zone defining a perimeter of rupture, suitable to be ruptured by a pressure exerted by the lower end of the tube to open it when the moveable means slide along said tube, wherein the assembly formed by the flap and one or more of the cylindrical body and one or more collars come into one piece; and wherein the frangible zone is a portion of the flap having a reduced thickness; with preference, the flap is further connected to a collar by at least one hinge in a form of a leg showing an extra thickness portion.

For example, the recipient is a container that is suitable to cooperate with the neck of a cartridge; remarkable in that the central element is a blade suitable to cut the sealing means of the cartridge preferably to allow a product contained in the cartridge to flow out into said container. With preference, the central element is a blade and the blade is selected from a pick, a bevel or a tube with a bevelled or twisted shape

For example, the recipient is a container that is suitable to cooperate with the neck of a cartridge; remarkable in that the central element is a spur suitable to push the sealing means of the cartridge to allow a product contained in the cartridge to flow out into said container. According to a second aspect, a preform is disclosed to produce by blow molding, preferably by injection blow molding or by injection stretch blow molding, a recipient according to the first aspect, the preform comprising a longitudinal body having a base at one longitudinal end and at an opposite end adjoining a neck section provided with a pouring aperture; the preform being remarkable in that the neck section is a ring comprising a central element and a socket surrounding the central element wherein both the socket and the central element show a lower end and an upper end, and are connected by their respective upper ends by means of a disc with a central aperture; wherein the assembly comprising the socket, the central element and the disc is forming a ring that comes into one piece; wherein the diameter of the longitudinal body is smaller than the diameter of the neck section so that the neck section shows a shoulder at the base of the longitudinal body.

In a preferred example, the ring shows one or more holding reliefs. The socket of the ring of the neck section of the preform shows an internal relief being an internal thread. With preference, the outer surface of the central element is facing at least one internal relief of the socket. The internal thread can be continuous or discontinuous.

For example, the one or more holding reliefs are selected from one or more flats on the outer surface of the socket; one or more grooves or ribs extending along the length of the socket and placed on the outer surface of the socket; one or more lugs on the inner surface of the tube when the central element is a tube; one or more grooves or ribs extending along the length of the tube and placed on the inner surface of the tube when the central element is a tube; one or more notches in the thickness of the lower end of the socket and/or in the thickness of the lower end of the tube when the central element is a tube; a crenellation of the lower end of the socket and/or of the lower end of the tube when the central element is a tube. The presence of the one or more holding reliefs molded in the preform is advantageous to the unscrewing and demolding with ejection of the article automatically and industrially at a later stage of the process injection blow molding or injection stretch blow molding.

### Description of the figures

Other aspects and advantages of the disclosure will be clearer after reading the following detailed description taken in conjunction with the drawings provided, in which:
- Figure 1 is a cross-sectional view of a monobloc recipient according to the disclosure.
- Figure 2 illustrates the preform that may be used to produce a monobloc recipient.
- Figure 3 illustrates an example of holding reliefs that may be shown by a recipient according to the disclosure.
- Figure 4 illustrates another example of holding reliefs that may be shown by a recipient according to the disclosure.
- Figure 5 illustrates another example of holding reliefs that may be shown by a recipient according to the disclosure.
- Figure 6 illustrates the injection blow-molding process.
- Figure 7 illustrates the welding of the lower wall of the reservoir to the disc of the ring during the blow molding step.
- Figure 8 is a representation of the outside of the recipient.
- Figure 9 shows a recipient according to the disclosure wherein the reservoir has a wall surrounded by a housing.
- Figure 10 is an upper view of an example of moveable sealing means.
- Figure 11 is a lower view of an example of moveable sealing means.
- Figure 12 is a cross-sectional view of a monobloc recipient according to the disclosure comprising moveable sealing means in their closed position.
- Figure 13 is a cross-sectional view of a monobloc recipient according to the disclosure comprising moveable sealing means in their opened position.
- Figure 14 is a cross-sectional view of a monobloc recipient according to the disclosure acting as a container and cooperating with a cartridge.
- Figure 15 is a cross-sectional view of a set according to the disclosure.

### Detailed description

In the following description, the term "comprise" is synonymous with "include" and is not limiting in that it allows the presence of other elements in the recipient or the movable sealing means. It is understood that the term "comprise" includes the wording "consist of". Similarly, the terms "inferior", "superior", "lower", "higher" and "upper" will be understood in relation to the general orientation of the recipient when used to dispense a product in a container. Thus, "lower" will mean greater ground proximity than "higher" or "upper" along the vertical axis. In the different figures, the same references designate identical or similar elements.

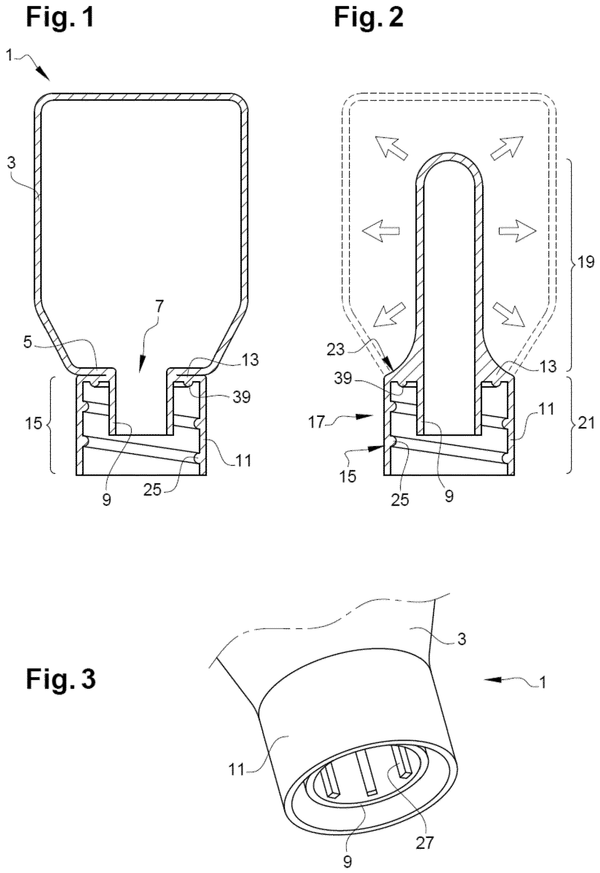

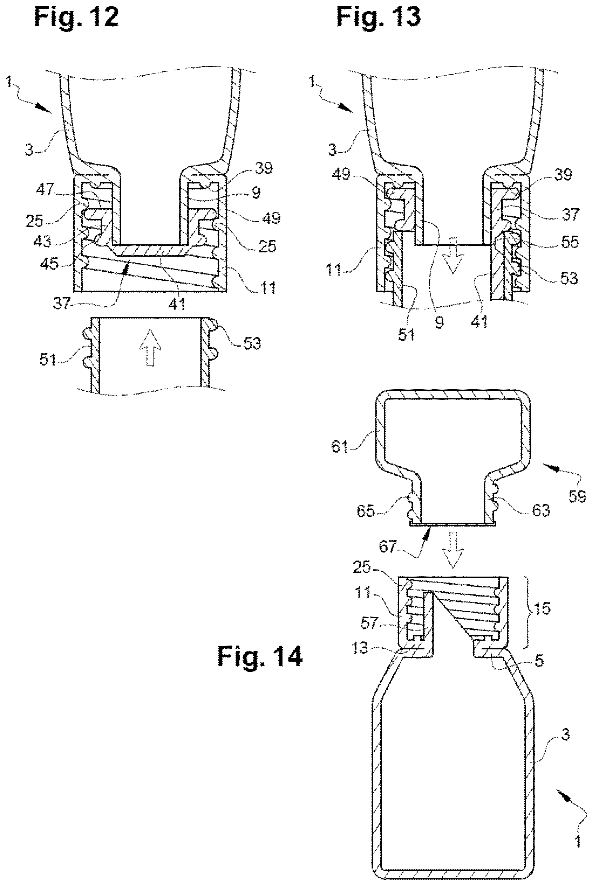

Reference is made to figures 1 and 14. In figure 1, a recipient 1 according to the disclosure is depicted, said recipient 1 is suitable to cooperate with the neck of a container (see figures 12 and 13) to allow a product contained in the recipient 1 to flow out into said container. In figure 14, a recipient 1 according to the disclosure is depicted, said recipient 1 is suitable to cooperate with the neck 63 of a cartridge 59 to allow a product contained in the reservoir 61 of the cartridge 59 to flow out into a reservoir 3 of the recipient 1.

On figure 1 the recipient 1 is depicted without sealing means. The recipient 1 comprises a reservoir 3 which is suitable to contain said product, the reservoir having wall including a bottom wall 5 comprising an opening 7; a central element being a tube 9 arranged at the opening 7 of the reservoir 3; a socket 11 arranged to surround the tube 9.

According to the disclosure, the central element (9, 57) can be selected from a tube 9 and/or a blade 57. In figures 1 to 7, 9, 12 and 13, the central element is depicted as a tube 9. The central element (9,57) is advantageously selected to be a tube 9 when the recipient 1 is a cartridge that is suitable to cooperate with the neck of a container to allow a product contained in the recipient to flow out into said container. In figure 14, the central element (9, 57) is depicted as a blade 57. The central element (9, 57) is advantageously selected to be a blade 57 when the recipient 1 is a container that is suitable to cooperate with the neck 63 of a cartridge 59 to allow a product contained in the cartridge 59 to flow out into the reservoir 3 of said recipient 1.

According to the disclosure, both the socket 11 and the central element (9; 57) show a lower end and an upper end and are connected by their respective upper ends by means of a disc 13 with a central aperture, so that the disc is arranged at their upper ends. The assembly comprising the socket 11, the central element (9; 57) and the disc 13 is forming a ring 15 that comes into one piece (*i.e*., are integral).

As it will be seen in details, the recipient is a blow-molded recipient and the ring 15 forms part of the recipient but also of the preform used to produce the recipient. Thus, the ring can be produced by moulding a plastic material. In the recipient 1 of the disclosure, at least a part of the bottom wall 5 of the reservoir is arranged to face the disc 13 and the reservoir 3 is irreversibly fixed to the ring 15 by welding.

Since the reservoir is facing, by means of at least a part of its bottom wall, the disc of the ring the recipient shows two layers at the interface between the ring and the reservoir. These layers are welded. The presence of these two layers allows more flexibility in the conception of the reservoir and therefore it allows the reservoir to have any targeted dimension or shape.

As illustrated in figure 1, the ring 15 and the whole reservoir 3 come into one piece. In other words, the socket 11, the central element (9; 57), the disc 13 and the reservoir 3 come into one piece (*i.e*., are integral). The recipient is therefore said to be monobloc since it is built into a single piece except for the sealing means. According to the disclosure, the recipient 1 is a blow-molded article. For example, the recipient 1 is an injection blow molded article or an injection stretch blow molded article. The opening 7 of the reservoir which is placed in continuity with the central element (9; 57) is therefore also used to fill the reservoir. The reservoir has a single opening 7 arranged on the bottom wall.

Figure 2 illustrates the blow molding process used to produce the recipient 1 of the disclosure wherein a preform 17 has been produced by molding or injection molding and then blown to form the reservoir of the recipient. In figure 2, the shape of the reservoir formed by blowing is represented in dotted lines. The preform 17 comprises a longitudinal body 19 having a base at one longitudinal end and an opposite end adjoining a neck section 21 provided with a pouring aperture. The preform 17 according to the disclosure is remarkable in that the neck section 21 is a ring 15 comprising a central element 9 and a socket 11 surrounding the central element 9 wherein both the socket 11 and the central element 9 show a lower end and an upper end, and are connected by their respective upper ends by means of a disc 13 with a central aperture. For example, the diameter of the longitudinal body 19 is smaller than the diameter of the neck section 21 so that the neck section shows a shoulder 23 at the base of the longitudinal body 19.

It is understood that the ring 15 of the neck section 21 of the preform 17 is the same as the ring 15 of the recipient 1 according to the disclosure. Thus, features describing the ring 15 of the neck section 21 of the preform 17 are also features describing the ring 15 of the recipient. For example, stating that the inner surface of the socket of the ring is smooth means that the socket of the ring of the neck section of the preform shows an inner smooth surface, and as a consequence, the socket of the ring of the recipient formed from the preform also shows an inner smooth surface. For example, stating that the socket 11 of the ring 15 shows an internal relief means that the socket 11 of the ring 15 of the neck section 21 of the preform 17 shows an internal relief 25, and as a consequence, the socket 11 of the ring 15 of the recipient 1 formed from the preform 17 also shows an internal relief 25. The indication that the socket 11 of the ring 15 shows an internal relief 25 is valid when the recipient 1 is a blow-molded article selected from an injection blow molded article or an injection stretch blow molded article.

According to the invention, the socket 11 of the ring 15 shows an internal relief 25 being an internal thread. For example, the outer surface of the central element (9; 57) is facing at least one internal relief 25 of the socket 11. For example, the length of the socket 11 is greater or equal to the length of the central element (9; 57). For example, the disc 13, the socket 11 and the tube 9 are arranged concentrically. For example, the internal thread is continuous or is discontinuous.

Wherein, the socket 11 of the ring 15 of the neck section is showing an internal relief 25 and the recipient is an injection blow molded article or an injection stretch blow molded article, the ring 15 of the preform 17, and by consequence, the ring 15 of the recipient will preferably show one or more holding reliefs (27, 29, 31) configured to avoid the rotation of the recipient relative to a core pin of the injection blow molding apparatus or the injection stretch blow molding apparatus. The presence of the holding reliefs (27, 29, 31) eases unscrewing and demolding of the new recipient, according to the disclosure, during the production of the recipient by an injection blow molding process or an injection stretch blow molding process as discussed below.

For example, the one or more holding reliefs (27, 29, 31), as shown in figures 3 to 5, are selected from one or more flats 31 on the outer surface of the socket 11; one or more grooves or ribs extending along the length of the socket 11 and placed on the outer surface of the socket 11; one or more lugs on the inner surface of the tube 9 when the central element is a tube 9; one or more grooves or ribs 27 extending along the length of the tube 9 and placed on the inner surface of the tube 9 when the central element is a tube; one or more notches 29 in the thickness of the lower end of the socket 11 and/or in the thickness of the lower end of the tube 9 when the central element is a tube, a crenellation of the lower end of the socket 11 and/or of the lower end of the tube 9 when the central element is a tube.

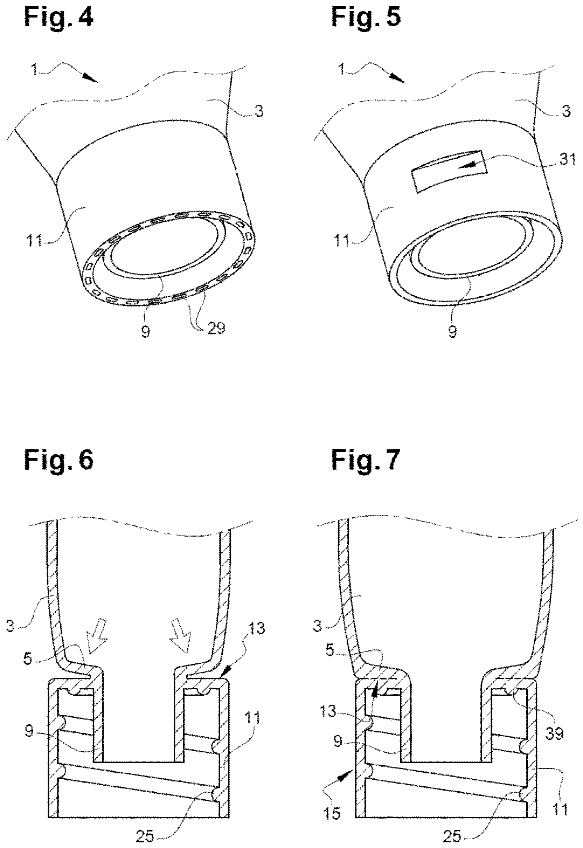

Figure 3 illustrates an example of holding reliefs according to the disclosure wherein one or more ribs 27 are extending along the length of the tube 9 and placed on the inner surface of the tube 9. Figure 4 illustrates another example of holding reliefs according to the disclosure wherein one or more notches 29 are formed in the thickness of the lower end of the socket 11. Figure 5 illustrates another example of holding reliefs according to the disclosure wherein at least one flat 31 is present on the outer surface of the socket 11.

In a preferred embodiment, at least a part of the bottom wall 5 of the reservoir arranged to face the disc 13 is irreversibly fixed to the upper face of the disc 13 by welding during the blow molding process such as the injection blow molding process or the injection stretch blow molding process.

Injection blow molding and injection stretch blow molding are well-known techniques to the person skilled in the art that will not be described in detail here. It is nevertheless stated that the preform 17 of figure 2 is, in a first time, injection molded onto a core pin in an injection station. To this end, the apparatus preferably comprises an extruder and screw assembly that melt the polymer. The polymer is, for example, a thermoplastic material selected from polyethylene, polypropylene, polystyrene, polylactide and any mixture thereof, or is a plastic material being one or more polyester, preferably polyethylene terephthalate. The molten polymer is fed into a hot runner manifold where it is injected through nozzles to a cavity mold surrounding a core pin. The cavity mold forms the external shape of the preform 17 and the core pin the internal shape. The ring 15 is formed at the injection stage as the neck section of the preform 17. The reservoir is not yet formed but come into one piece (*i.e*., is integral) with the ring 15 as an attached thick tube of polymer, similar in appearance to a test tube.

Then, the preform mold opens and the core pin is brought with the preform 17 to a blow molding station, for example by rotating, to be inflated. The preform 17 is clamped into a blow mold that forms the external shape of the reservoir. For example, the diameter of the longitudinal body 19 is smaller than the diameter of the neck section so the neck section shows a shoulder 23 at the base of the longitudinal body 19. The neck section 21 can be inserted in the blow mold or not. It is preferable that the neck section 21 is inserted at least in part in the blow mold.

In case it is not inserted into the blow mold the final recipient will have at least a part of the bottom wall 5 of the reservoir arranged to face the disc and the reservoir is irreversibly fixed to the ring 15 through the central element (9; 57).

During the blowing step due to the pressure exerted on the inner surface of the longitudinal body by compressed air, the longitudinal body inflates to form a reservoir 3 wherein the bottom wall 5 is placed to face the disc 13 as illustrated in figure 6, as an intermediate position. Then further pressure exerted by the compressed air resulting in the bottom wall 5 being pressed against the upper face of the disc 13 of the ring 15 and welded to it. It is understood that, the steps of blowing the reservoir and welding of the reservoir to the ring are a single step performed in the same mold (i.e., the steps of blowing the reservoir and welding of the reservoir to the ring are done simultaneously and in the same mold).

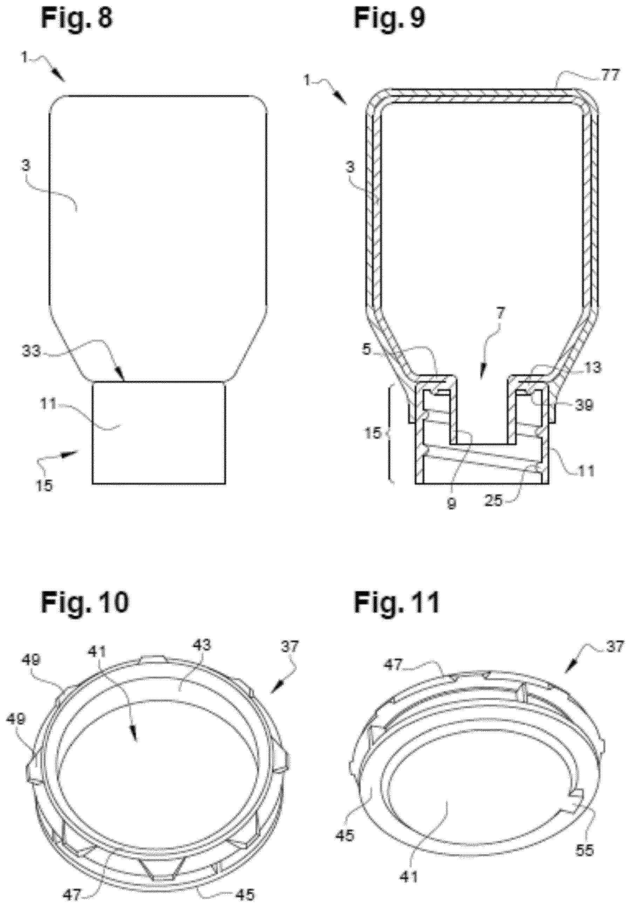

As a result of the welding of the bottom wall of the reservoir 3 on the ring 15, the recipient 1 shows a weld line 33 on its outer surface as illustrated in figure 8.

It is possible with a specific design of the mold that the reservoir be not welded to the ring and that the bottom wall of the reservoir is facing the disc of the ring. The reservoir will nevertheless still be irreversibly fixed to the ring because it is integral with it.

The injection blow molded article or an injection stretch blow molded article is then ejected. In such a case, the person skilled in the art would have an advantage to eject the article before it has completely cooled. The ejection of the article can be made by force by pushing the article to detach it from the core pin. However, to preserve the internal relief 25 of the socket 11 when it is an internal thread, the ejection is made in two steps. In the first step, the recipient is unscrewed from the base of core pin on that shows the complementary relief used to mold said internal relief 25 of the socket 11. Then, in a subsequent step, the recipient is pushed to be ejected from the core pin.

To allow the unscrewing of the recipient during the production process, and to allow it to be performed on an industrial way, the ring 15 of the recipient will preferably show one or more holding reliefs (27, 29, 31) configured to avoid the rotation of the recipient relative to the core pin of the injection blow molding apparatus or the injection stretch blow molding apparatus on which the ring was molded.

The presence of the one or more holding reliefs (27, 29, 31) is therefore advantageous to the unscrewing and demolding with ejection of the article automatically and industrially.

Since the recipient is a blow-molded article it is possible for the reservoir to have a thin wall. Thus, in an embodiment, the reservoir has a wall thickness of at most 1.0 mm; preferably at most 0.9 mm; more preferably at most 0.8 mm. For example, the reservoir has a wall thickness of at least 0.3 mm.

In an embodiment depicted in figure 9, the reservoir 1 is surrounded by a housing 77 made of one or more materials that can be the same or different from the material constituting the ring. With preference, the one or more materials of the housing are selected from plastic material, metal, wood, glass, cardboard, paper or any mixture thereof. This embodiment allows using a reservoir having a thin wall, since additional rigidity is then provided by the housing. However, it can be used with a reservoir having a thick wall as well. For example, at least a part of the reservoir or the whole reservoir 1 is surrounded by a housing 77 made of one or more materials different from the material constituting the ring. It is understood that the reservoir and the housing are not integral. The housing 77 can be glued or not glued to the reservoir and/or to the ring.

For example, the reservoir 3 is dimensioned to have a width greater than the diameter of the opening 7 or the tube 9; with preference, the width of the reservoir 3 is at least 1.1 times greater than the diameter of the opening 7 or the tube 9, more preferably, at least 1.2 times greater; more preferably at least 1.5 times greater, even more preferably at least 1.8 times greater, most preferably at least 2.0 times greater; or at least 2.5 times greater.

The recipient 1 is a blow-molded article selected from an injection blow molded article or an injection stretch blow molded article, the ring 15 and the reservoir come into one piece and are preferably made from the same material. After injection of the preform, the reservoir is blown from the preform into the mold and can weld to the ring due to the high temperature of the plastic. This process takes place in the mold in one step.

For example, the recipient comprises a ring and a reservoir and in that the process comprise a step of welding of the reservoir to the ring and in the step of blow molding or stretch blow molding the preform 17 to form an article and the step of welding of the reservoir to the ring are done simultaneously.

For example, the ring 15 is made of a plastic material being a thermoplastic material selected from polyethylene, polypropylene, polystyrene, polylactide and any mixture thereof, or is a plastic material being one or more polyester, preferably polyethylene terephthalate; and the housing 77 or at least a part of the housing 77 is made of one or more material selected from plastic material, metal, wood, glass, cardboard and paper; wherein the plastic material is a thermoplastic material selected from polyethylene, polypropylene, polystyrene, polylactide and any mixture thereof, or is a plastic material being one or more polyester, preferably polyethylene terephthalate. In case of bi-injection the ring 15 and the reservoir 3 can be integral (i.e., come into one piece) but made of different plastic material. With preference, the ring and the reservoir are made from the same plastic material.

For example, the ring 15 and/or the reservoir 3 is made of a plastic material comprising at least 30 wt.% of post-consumer resin based on the total weight of the plastic material; with preference, at least 40 wt.%; or at least 50 wt.%; or at least 60 wt.%; or is entirely made of post-consumer resin *(i.e.* 100 wt.%). For example, wherein the post-consumer resin is a blend of recycled polypropylene and recycled polyethylene, wherein the content of the recycled polyethylene is ranging from 2 to 20 wt.% relative to the total weight of the post-consumer resin. For example, wherein the post-consumer resin is a blend of recycled polypropylene and recycled polyethylene, wherein the content of the recycled polypropylene is ranging from 2 to 20 wt.% relative to the total weight of the post-consumer resin.

For example, the central aperture of the disc 13 has a diameter equal to or greater than the opening 7 of the reservoir 3; and/or the central aperture of the disc 13 has a diameter equal or lower than the internal diameter of the tube 9.

For example, the length of the socket 11 is greater or equal to the length of the central element (9; 57); and/or the disc, the socket 11 and the central element (9; 57) are arranged concentrically; and/or the socket 11 shows an internal relief 25 which faces the central element (9; 57); with preference, the internal relief 25 of the socket 11 is an internal thread or one or more lugs or one or more grooves.

Wherein the central element (9; 57) is a tube 9, the recipient 1 of the disclosure may further comprise sealing means 37 arranged to close the tube 9 at its lower end. In such a configuration illustrated in figure 12, the product contained in the recipient 1 can flow into the tube 9 but not outside the recipient 1 when the recipient 1 is sealed. Thus, the product contained in the recipient 1 is stored in both the reservoir 3 and the tube 9.

When said recipient 1 is arranged on the neck 51 of a container, it allows the fluid product or the powder to flow out into said container. The container is preferably filled with a liquid, thus the product and the liquid form a solution. For example, the recipient 1 comprises means 25 to be screwed on the neck of the container allowing the possibility to safely shake the assembly formed by the recipient 1 and the container to mix the product and the liquid. These means are preferably the internal relief of the socket. The user can later have access to the solution by removing the recipient 1 from the neck of the container.

The product flows out from the reservoir 3 into the interior of the container as a result of gravity as illustrated by an arrow in figure 13. As an alternative to this, the reservoir can be a flexible material which is suitable to be compressed to force the product to flow out from the reservoir into the container, for example through a valve produced in a resilient material.

For example, to allow the user to safely shake the container and the recipient 1, the ring 15 will comprise securing means 39 that preferably cooperate with the sealing means 37 for that purpose. For example, the disc 13 has a lower face arranged internally to the ring 15 and the lower face of the disc 13 shows one or more reliefs or a sealing washer is fixed to the lower face of the disc. When the lower face of the disc 13 shows one or more reliefs 39 the said relief may have an additional function of reducing the travel of the sealing means 37 on the tube 9.

An example of suitable movable sealing means 37 for closing the reservoir 3 is illustrated in figures 10 and 11. The movable sealing means 37 comprises at least one or a plurality of movable flaps 41. In the example illustrated in figures 10 and 11, the movable sealing means 37 comprises a single flap 41. In a preferred manner, said movable sealing means 37 can control the closing and the opening of the reservoir in a reversible and reproducible manner. In a disposable version of the present recipient, the movable means are no longer able to serve to close the reservoir again once the one or more flaps have been opened.

Thus, the recipient 1 may comprise moveable sealing means 37 to close the opening of the reservoir by closing the tube 9 of the ring 15. The moveable sealing means 37 comprise a cylindrical body 43 and one or more flaps 41 closing off the lower aperture of the cylindrical body 43. The cylindrical body 43 is dimensioned to surround the tube 9 of the ring 15 and to slide along it between a closing and an opening position. In the closing position, the one or more flaps 41 close the lower aperture of the tube 9. In the opening position, the one or more flaps 41 are opened by the pressure exerted by the lower end of the tube 9 on said flaps, and the lower end of the tube 9 passes through the cylindrical body 43 of the movable sealing means 37. The moveable sealing 37 means further comprise at least one collar (45, 47) configured to cooperate with the neck of the container to allow the moveable sealing means 37 to slide along the tube 9 by the pressure exerted on said collar by the neck of the container thereby causing the opening of the one or more flaps 41. For example, the movable sealing means 37 come into one piece, *i.e.* the cylindrical body 43, the one or more flaps 41 and the least one collar (45, 47) come into one piece. The movable sealing means 37 can be made of a plastic material being a thermoplastic material selected from polyethylene, polypropylene, polystyrene, polylactide and any mixture thereof, or the movable sealing means 37 can be made of a plastic material being one or more polyesters, preferably polyethylene terephthalate. For example, the movable sealing means 37 are made of a plastic material comprising at least 30 wt.% of post-consumer resin based on the total weight of the plastic material; with preference, at least 40 wt.%; or at least 50 wt.%; or at least 60 wt.%; or can be entirely made of post-consumer resin (*i.e.* 100 wt.%).

As depicted in figures 10 and 11, the movable sealing means 37 may comprise two collars (45, 47) distributed along the cylindrical body 43 to show a lower collar 45 and an upper collar 47, wherein the lower collar 45 is the one arranged to cooperate with the neck 51 of the container.

In an embodiment, not represented, the moveable sealing means comprise clipping means cooperating with complementary clipping means on the socket to be maintained in position for closing the opening of the reservoir. In such a case, it is understood that the clipping means are broken when pressure is exerted on the collar of the movable sealing means to allow it to slide along the tube to open the one or more flaps. In this embodiment, it is preferred that the movable sealing means have only one collar.

In an embodiment, the recipient 1, the socket 11 shows a lower aperture dimensioned to receive the neck 51 of the container. As it can be seen in figures 12 and 13, the lower aperture of the socket 11 has an internal diameter greater than the external diameter of the collar or at least one of the collars (45, 47), of the movable sealing means 37. When the socket 11 comprises an internal thread 25, the internal diameter of the socket 11 is reduced by said internal thread. When the movable sealing means comprises only one collar, this collar has an external diameter lower than the internal diameter of the socket 11. In such a case, the collar, which is the collar configured to cooperate with the neck of the container, preferably further shows holding lugs 49 configured to cooperate with an internal thread of the socket 11, or with clipping means inside the socket 11, to maintain the moveable sealing means in position inside the socket 11, closing the opening of the reservoir.

When the movable sealing means comprise two collars (45, 47) at least the lower collar 45 has an external diameter smaller than the internal diameter of the socket 11. Preferably both the upper and the lower collars (45, 47) have an external diameter smaller than the internal diameter of the socket 11. This allows the moveable sealing means 37 to move inside the socket 11.

When the movable sealing means comprise two collars (45, 47), the upper collar 47 preferably comprises holding lugs 49 configured to cooperate with an internal thread 25 of the socket 11 to maintain the moveable sealing means 37 in position inside the socket 11, closing the tube 9. Preferably, the holding lugs 49 are laid on the top of the internal thread 25 of the socket 11 in order not to be retained by the thread 25 when the movable sealing means is sliding along the tube 9. In such an embodiment, it is understood that the recipient 1 can be screwed on the neck 51 of the container, the internal thread of the socket 11 cooperating with the external thread 53 of the neck 51 of the container.

In a variant (not represented), the upper collar of the movable sealing means comprises holding lugs configured to cooperate with one or more internal lugs *(i.e.* clipping means) inside the socket to maintain the moveable sealing means in position inside the socket, closing the opening of the reservoir. In a variant (not represented), the upper collar of the movable sealing means comprises one or more hoops configured to cooperate with one or more lugs *(i.e.* clipping means) inside the socket to maintain the moveable sealing means in position inside the socket, closing the opening of the reservoir. In such an embodiment, it is understood that the recipient can be pressed on the neck of the container to be opened. Preferably the collar or one of the collars that are configured to cooperate with the neck of the container has an outer diameter of at least twice the diameter of the opening of the reservoir to allow the recipient to be opened by cooperation with necks of different diameters.

In both cases, the neck 51 is put in contact with the lower collar 45 of the movable sealing means 37 and the screwing or the pressing of the recipient 1 causes the entry of the neck 51 deeper into the recipient 1 thereby exerting pressure on the lower collar 45 of the movable sealing means 37. The moveable sealing means 37 is forced to slide along the tube 9 causing the lower end of the tube 9 to pass through the moveable sealing means 37, by the rupture of weakened lines forming a frangible zone on the one or more flaps 41.

Optionally, to assist the rupture of the weakened lines forming frangible zone on the one or more flaps 41, the tube 9 shows a bevelled or twisted shape so that its periphery, that is intended to come into contact with the one or more flaps 41, shows a variation in length. Alternatively, the central element is a tube and the lower end of the tube is straight so that the tube shows no variation in length.

As stated earlier, the moveable sealing means 37 may comprise a single flap or a plurality of flaps 41. In an embodiment (not represented), the moveable sealing means comprises a plurality of flaps each flap having at least one side in common with an adjacent flap and whose distal ends form a point or line of junction to said plurality of flaps and the tube will exert a pressure on the proximal end of the flaps to open them when the movable sealing means slide along said lower wall. The lower end of the tube is in contact with the proximal end of the flaps to activate the opening of the movable sealing means. Weakened lines are arranged on the sides of the flaps and break under the effect of the pressure. The flaps will carry out a rotational movement from their initial positions so that once the flaps have been opened, the flaps will be arranged parallel to the tube.

In a preferred embodiment illustrated in figures 10 to 13, the movable sealing means 37 comprise a single flap 41. The flap 41 is connected to the lower collar 45 by a frangible zone defining a perimeter of rupture suitable to be ruptured by a pressure exerted by the lower end of the tube to open it when the sealing means 37 slide along said tube 9. For example, at least the flap 41 and the lower collar 45 are made of the same material and come into one piece, the frangible zone is obtained by reducing the thickness of the wall of the flap 41. Preferably, the flap 41 is further connected to the lower collar 45 by at least one hinge 55 in the form of a leg showing a thickness portion.

In a preferred manner, even after the opening of the movable sealing means 37, the one or more flaps remain connected to the lower collar 45 of the movable sealing means 37 through their proximal end when the movable sealing means 37 comprises a plurality of flap and through the hinge 55 when the movable sealing means comprises a single flap 41, as illustrated on figure 13. Thus, no fragments can contaminate the solution in the container.

Figure 12 shows a sectional view of a recipient 1 according to the disclosure, in its closed position, *i.e.* before the opening of the movable sealing means 37. Figure 13 shows a sectional view of a recipient 1 according to the disclosure in its opened position, *i.e.* after the opening of the movable sealing means 37. The displacement of the tube 9 through the movable sealing means 37 has allowed the frangible zone arranged in the periphery of the flap 41 to break. The flap 41 cooperates with the lower end of tube 9 to be open. The hinge 55 of the flap 55 nevertheless remains connected to the lower collar 45 of the movable sealing means 37.

The variants discussed in the present application are particularly adapted to applications in both the food or non-food area.

The recipient 1 of the present disclosure provides the advantage of allowing the preparation *in situ* of liquid composition (solution or dispersion) under the best conditions of hygiene. The reservoir can contain, apart from pharmaceutical components and food complements, food quality products suitable to be consumed in the liquid form by mixing the said product with a liquid contained in the container. As an alternative to this, the product contained in the reservoir can be non-food, for example, a care product, a cleaning product or a cosmetic product. In said case, the tightness of the recipient 1, and particularly of the movable sealing means, allows the product to be conserved shielded from the atmosphere and the deterioration is therefore avoided. If the product contained in the reservoir is in concentrated form, thus presenting a risk for the user, the present disclosure will allow the preparation of a diluted solution without risk of contact. The diluted solution formed could be used without any particular precaution.

Figure 14 shows the recipient 1 being a container which is suitable to cooperate with the neck 63 of a cartridge 59. The cartridge 59 is in the form of a small bottle with a reservoir 61 and a neck with an external thread 65. The neck 63 of the cartridge 59 is closed by sealing means 67 such as an operculum in plastic and/or metal. The central element is a blade 57 suitable to cut the sealing means of the cartridge 59 to allow a product contained in the cartridge 59 to flow out into the reservoir 3 of said recipient 1. It is understood that the cartridge 59 can be screwed on the ring 15 of the recipient, the internal thread of the socket 11 cooperating with the external thread 65 of the neck 63 of the cartridge 59. The screwing movement allows the blade 57 to puncture and cut the sealing means 57.

For example, the blade 57 is selected from a pick, a bevel or a tube with a bevelled or twisted shape. In figure 14, the blade 57 is depicted as a bevel.

In an example not illustrated, the recipient is a container that is suitable to cooperate with the neck of a cartridge. The cartridge is in the form of a small bottle with a reservoir and a neck with an external thread. The neck of the cartridge is closed by sealing means. The central element is a spur suitable to push the sealing means of the cartridge into the cartridge to allow a product contained in the cartridge to flow out into the reservoir of said recipient. It is understood that the cartridge can be screwed on the ring of the recipient, the internal thread of the socket cooperating with the external thread of the neck of the cartridge. The screwing movement allows the spur to push the sealing means into the cartridge to open them.

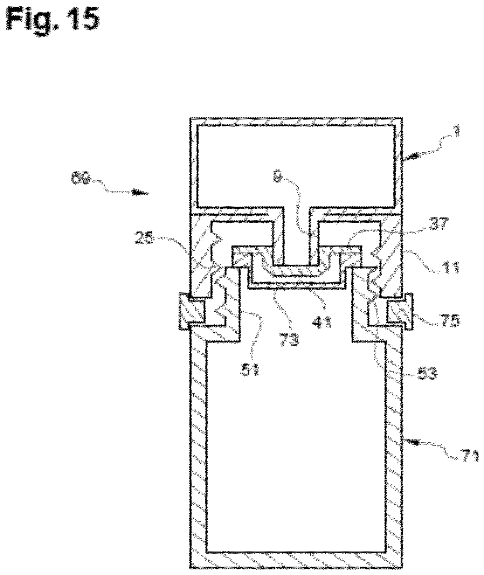

On figure 15 an example of a set 69 comprising a cartridge and a container is illustrated. In the set, the cartridge and the container are pre-assembled or not. In the embodiment illustrated, the cartridge and the container are pre-assembled in that the internal thread or relief 25 of the socket 11 is already engaged with the external thread 53 or relief of the neck 51 of the container 71. The set can comprise a tamper evident removable seal 75 or not. It is preferred that when the cartridge and the container are pre-assembled, the set comprises a tamper evident removable seal 75. The set 69 comprises a cartridge that is a recipient 1 according to the present disclosure pre-assembled with a container 71. However, in an embodiment not illustrated, the set may comprise a container that is a recipient according to the present disclosure pre-assembled with a cartridge.

For example, the recipient 1 comprise sealing means 37 arranged to close the tube 9 at its lower end, and the container comprises sealing means 73 such as an operculum in plastic and/or metal. For example, the set is pre-assembled so that the tube 9 and/or the sealing means 37 arranged to close the tube 9 partially enter into the neck of the container 71 without damaging its sealing means 73. With preference, the set 69 further comprises a tamper evident removable seal 75 or tear away band on the periphery of the cartridge. More preferably the tamper evident removable seal 75 or tear away band are arranged to maintain a space between the cartridge and the container such as a bottle. In an embodiment, the tamper evident removable seal 75 is partially inserted between the socket and the container.

Once the tamper evident removable seal 75 is removed the cartridge 1 can be screwed on the neck of the container 71, the internal thread or relief 25 of the socket 11 cooperating with the external thread 53 or relief of the neck 51 of the container 71. The screwing movement allows the opening of the movable sealing means 37. In an embodiment not illustrated the cartridge is pushed toward the container.

The displacement of the tube 9 through the movable sealing means 37 has allowed the frangible zone arranged in the periphery of the flap 41 to break. The flap 41 cooperates with the lower end of tube 9 to be open. The flap 41 and the lower end of tube 99 will also cut the sealing means 73 of the container. The product contained in the cartridge 1 can therefore flow out into the container 71.

## Claims

1. A process of injection blow molding or injection stretch blow molding of an article; the process comprising a step of injection molding of a preform (17) on a core pin followed by a step of blow molding or stretch blow molding of said preform (17); wherein the article is a recipient (1) which is a blow-molded article comprising:
- a reservoir (3), the reservoir (3) having a bottom wall (5) comprising an opening (7);
- a central element (9, 57) arranged at the opening (7) of the reservoir (3);
- a socket (11) arranged to surround the central element (9, 57);
wherein both the socket (11) and the central element (9, 57) show a lower end and an upper end, and are connected by their respective upper ends by means of a disc (13) with a central aperture, wherein the assembly comprising the socket (11), the central element (9, 57) and the disc (13) is forming a ring (15) that comes into one piece; wherein least a part of the bottom wall (5) of the reservoir is arranged to face the disc (13); Wherein the ring (15) and the reservoir (3) also come into one piece so that the reservoir is irreversibly fixed to the ring (15);
wherein the socket (11) shows an internal relief (25) being an internal thread; and in that the step of blow molding or stretch blow molding of the preform (17) is followed by a step of unscrewing the article from the core pin performed before a step of ejection of said article;
and wherein the reservoir has a single opening (7) being the opening (7) of the bottom wall.

2. The process according to claim 1, **characterized in that** at least a part of the bottom wall (5) of the reservoir is irreversibly fixed to the ring (15) by welding on the upper face of the disc (13) so that the recipient (1) shows a weld line on its outer surface; and/or **in that** the process comprises a step of welding of the reservoir to the ring and wherein the step of blow molding or stretch blow molding the preform (17) to form an article and the step of welding of the reservoir to the ring are done simultaneously.

3. The process according to claim 1 or 2, **characterized in that** the ring (15) shows one or more holding reliefs (27, 29, 31); with preference, the outer surface of the central element (9, 57) is facing at least one internal relief (25) of the socket (11) and wherein the at least one internal relief (25) of the socket (11) is different from the one or more holding reliefs (27, 29, 31) of the ring (15).

4. The process according to any one of claims 1 to 3, **characterized in that** the ring (15) shows one or more holding reliefs (27, 29, 31) and the one or more holding reliefs (27, 29, 31) are selected from one or more flats on the outer surface of the socket (11); one or more grooves or ribs extending along the length of the socket (11) and placed on the outer surface of the socket (11); one or more lugs on the inner surface of the tube (9) when the central element is a tube (9); one or more grooves or ribs extending along the length of the tube (9) and placed on the inner surface of the tube (9) when the central element is a tube (9); one or more notches in the thickness of the lower end of the socket (11) and/or in the thickness of the lower end of the tube (9) when the central element is a tube (9), a crenellation of the lower end of the socket (11) and/or of the lower end of the tube (9) when the central element is a tube (9).

5. The process according to any one of claims 1 to 4, **characterized in that** the reservoir (3) has a wall having a thickness of at most 1.0 mm; preferably, at most 0.9 mm; more preferably, at most 0.8 mm.

6. The process according to claim 5, **characterized in that** the reservoir (3) is surrounded by a housing made of one or more materials that can be the same or different from the material constituting the ring (15); with preference, the one or more materials of the housing are selected from plastic material, metal, wood, glass, cardboard, paper or any mixture thereof.

7. The process according to any one of claims 1 to 6, **characterized in that** the reservoir (3) is dimensioned to have a width greater than the diameter of the opening (7) and/or in that the central element is a tube (9) and the lower end of the tube (9)
- shows a beveled or twisted shape so that the tube (9) shows a variation in length; or
- is straight so that the tube (9) shows no variation in length.

8. The process according to any one of claims 1 to 7, **characterized in that** the ring (15) and the reservoir (3) are made of a plastic material
- comprising at least 30 wt.% of post-consumer resin based on the total weight of the plastic material; and/or
- being a thermoplastic material selected from polyethylene, polypropylene, polystyrene, polylactide and any mixture thereof, or being one or more polyester; with preference, the ring (15) and the reservoir (3) are made of polyethylene terephthalate.

9. The process according to any one of claims 1 to 8, **characterized in that** the central element is a tube (9) and the recipient (1) further comprises sealing means (37) arranged to close the tube (9) at its lower end so that the product contained in the recipient (1) is stored in both the reservoir (3) and the tube (9): and/or in that the disc (13) has a lower face arranged internally to the ring (15) and
- the lower face of the disc (13) shows one or more securing means (39), or
- a sealing washer is fixed to the lower face of the disc (13).

10. The process according to any one of claims 1 to 9, wherein the recipient is a cartridge that is suitable to cooperate with the neck of a container to allow a product contained in the recipient (1) to flow out into said container; **characterized in that** the central element is a tube (9) and the recipient (1) further comprises moveable sealing means (37) arranged to close the tube (9) at its lower end, the moveable sealing means (37) comprising a cylindrical body (43) with a higher and a lower aperture, and one or more flaps (41) closing the lower aperture of the cylindrical body (43), wherein said cylindrical body (43) is dimensioned to surround the tube (9) and to slide along it between a closing and an opening position, wherein in the opening position the one or more flaps (41) are opened by the pressure exerted by the tube (9) on said flaps (41); with preference, one or more flaps (41) are linked to the cylindrical body (43).

11. The process according to claim 9 or 10, **characterized in that** the moveable sealing means (37) comprises at least one collar (45, 47) arranged on the external side of the cylindrical body (43) and configured to cooperate with the neck (51) of a container to allow the moveable sealing means (37) to slide along the tube (9) by a pressure exerted on said collar (45, 47) by the neck (51) of the container causing the opening of the one or more flaps (41) and **in that** at least one collar (45, 47) of the moveable sealing means (37) comprises holding lugs (49) configured to cooperate with the internal relief (25) of the socket (11) to maintain the moveable sealing means (37) in position inside the socket (11), closing the tube (9).

12. The process according to any one of claims 10 to 11, **characterized in that** the movable sealing means (37) comprises two collars (45, 47) distributed along the cylindrical body (43) to show a lower collar (45) and an upper collar (47) wherein the lower collar (45) is the one arranged to cooperate with the neck (51) of the container and/or wherein the upper collar (47) of the moveable sealing means (37) comprises holding lugs (49) configured to cooperate with the internal thread (25) of the socket (11) to maintain the moveable sealing means (25) in position inside the socket (11), closing the tube (9); and/or **in that** the socket (11) shows a lower aperture dimensioned to receive the neck (51) of the container, wherein the lower aperture has an internal diameter greater than the external diameter of the one or more collars (45, 47) of the movable sealing means (37).

13. The process according to any one of claims 10 to 12, **characterized in that** the moveable sealing means (37) comprise
- a plurality of flaps, each flap having at least one side in common with an adjacent flap and whose distal end forms a junction point or a junction line to said plurality of flaps and **in that** the lower end of the tube (9) is arranged to exert a pressure on the proximal end on the flaps to open them when the moveable sealing means slide along the tube (9); or
- a single flap (41), wherein the flap (41) is connected to the cylindrical body (43) or to a collar (45, 47) by a frangible zone defining a perimeter of rupture, suitable to be ruptured by a pressure exerted by the lower end of the tube (9) to open it when the moveable means slide along said tube (9), **in that** the assembly formed by the flap (41) and one or more selected from the cylindrical body (43) and one or more collars (45, 47) come into one piece; and **in that** the frangible zone is a portion of the flap having a reduced thickness; with preference, the flap is further connected to a collar (45, 47) by at least one hinge (55) in a form of a leg showing an extra thickness portion.

14. The process according to any one claims 1 to 13, wherein the recipient (1) is a container that is suitable to cooperate with the neck (63) of a cartridge (59); **characterized in that** the central element is a blade (57) suitable to cut the sealing means of the cartridge (59), or a spur suitable to push the sealing means of the cartridge (59) to allow a product contained in the cartridge (59) to flow out into said container; with preference, the central element is a blade (57) and the blade is selected from a pick, a bevel (57) or a tube with a beveled or twisted shape.

## Patentansprüche

1. Verfahren zum Spritzblasformen oder Spritzstreckblasformen eines Gegenstands, wobei das Verfahren einen Schritt des Spritzgießens eines Vorformlings (17) auf einem Kernstift umfasst, gefolgt von einem Schritt des Blasformens oder Streckblasformens des Vorformlings (17), wobei der Gegenstand ein Behälter (1) ist, der ein blasgeformter Gegenstand ist, der Folgendes umfasst:
- ein Reservoir (3), wobei das Reservoir (3) eine Bodenwand (5) mit einer Öffnung (7) aufweist;
- ein zentrales Element (9, 57), das an der Öffnung (7) des Reservoirs (3) angeordnet ist;
- eine Fassung (11), die angeordnet ist, um das zentrale Element (9, 57) zu umgeben;
wobei sowohl die Fassung (11) als auch das zentrale Element (9, 57) ein unteres Ende und ein oberes Ende aufweisen und an ihren jeweiligen oberen Enden durch eine Scheibe (13) mit einer zentralen Öffnung verbunden sind, wobei die Baugruppe, die die Fassung (11), das zentrale Element (9, 57) und die Scheibe (13) umfasst, einen Ring (15) bildet, der in einem Stück kommt; wobei zumindest ein Teil der Bodenwand (5) des Reservoirs so angeordnet ist, dass er der Scheibe (13) zugewandt ist; wobei der Ring (15) und das Reservoir (3) ebenfalls einstückig sind, so dass das Reservoir irreversibel an dem Ring (15) befestigt ist;
wobei die Fassung (11) ein inneres Relief (25) aufweist, das ein Innengewinde ist; und dass auf den Schritt des Blasformens oder Streckblasformens des Vorformlings (17) ein Schritt des Abschraubens des Gegenstands vom Kernstift folgt, der vor einem Schritt des Ausstoßens des Gegenstands durchgeführt wird;
das Reservoir eine einzige Öffnung (7) aufweist, die die Öffnung (7) der Bodenwand ist.

2. Verfahren nach Anspruch 1, **dadurch gekennzeichnet, dass** mindestens ein Teil der Bodenwand (5) des Reservoirs irreversibel an dem Ring (15) durch Schweißen an der Oberseite der Scheibe (13) befestigt wird, so dass der Behälter (1) eine Schweißlinie an seiner Außenfläche zeigt; und/oder dass das Verfahren einen Schritt des Schweißens des Reservoirs an den Ring umfasst und wobei der Schritt des Blasformens oder Streckblasformens des Vorformlings (17), um einen Gegenstand zu bilden, und der Schritt des Schweißens des Reservoirs an den Ring gleichzeitig durchgeführt werden.

3. Verfahren nach Anspruch 1 oder 2, **dadurch gekennzeichnet, dass** der Ring (15) ein oder mehrere Haltereliefs (27, 29, 31) aufweist; vorzugsweise ist die Außenfläche des Zentralelements (9, 57) mindestens einem inneren Relief (25) der Fassung (11) zugewandt und wobei sich das mindestens eine innere Relief (25) der Fassung (11) von dem einen oder den mehreren Haltereliefs (27, 29, 31) des Rings (15) unterscheidet.

4. Verfahren nach einem der Ansprüche 1 bis 3, **dadurch gekennzeichnet, dass** der Ring (15) ein oder mehrere Haltereliefs (27, 29, 31) aufweist und das eine oder die mehreren Haltereliefs (27, 29, 31) aus einer oder mehreren Abflachungen auf der Außenfläche der Fassung (11) ausgewählt sind; eine oder mehrere Nuten oder Rippen, die sich entlang der Länge der Fassung (11) erstrecken und auf der Außenfläche der Fassung (11) angeordnet sind; eine oder mehrere Nasen auf der Innenfläche des Rohrs (9), wenn das zentrale Element ein Rohr (9) ist; eine oder mehrere Nuten oder Rippen, die sich entlang der Länge des Rohrs (9) erstrecken und auf der Innenfläche des Rohrs (9) angeordnet sind, wenn das zentrale Element ein Rohr (9) ist; eine oder mehrere Kerben in der Dicke des unteren Endes der Fassung (11) und/oder in der Dicke des unteren Endes des Rohrs (9), wenn das zentrale Element ein Rohr (9) ist, ein Zinnenmuster des unteren Endes der Fassung (11) und/oder des unteren Endes des Rohrs (9), wenn das zentrale Element ein Rohr (9) ist.

5. Verfahren nach einem der Ansprüche 1 bis 4, **dadurch gekennzeichnet, dass** das Reservoir (3) eine Wand mit einer Dicke von höchstens 1,0 mm; bevorzugt höchstens 0,9 mm; weiter bevorzugt höchstens 0,8 mm aufweist.

6. Verfahren nach Anspruch 5, **dadurch gekennzeichnet, dass** das Reservoir (3) von einem Gehäuse umgeben ist, das aus einem oder mehreren Materialien hergestellt ist, die gleich oder verschieden von dem Material sein können, das den Ring (15) bildet; vorzugsweise sind das eine oder die mehreren Materialien des Gehäuses aus Kunststoff, Metall, Holz, Glas, Karton, Papier oder einer beliebigen Mischung davon ausgewählt.

7. Verfahren nach einem der Ansprüche 1 bis 6, **dadurch gekennzeichnet, dass** das Reservoir (3) so dimensioniert ist, dass es eine Breite aufweist, die größer ist als der Durchmesser der Öffnung (7) und/oder dass das zentrale Element ein Rohr (9) ist und das untere Ende des Rohres (9)
- eine abgeschrägte oder verdrehte Form zeigt, so dass das Rohr (9) eine Längenvariation zeigt; oder
- gerade ist, so dass das Rohr (9) keine Längenvariation aufweist.

8. Verfahren nach einem der Ansprüche 1 bis 7, **dadurch gekennzeichnet, dass** der Ring (15) und das Reservoir (3) aus einem Kunststoffmaterial hergestellt sind,
- das mindestens 30 Gew.- % Post Consumer Resin, bezogen auf das Gesamtgewicht des Kunststoffmaterials, umfasst; und/oder
- wobei es sich um ein thermoplastisches Material handelt, das aus Polyethylen, Polypropylen, Polystyrol, Polylactid und einer beliebigen Mischung davon ausgewählt ist, oder um einen oder mehrere Polyester; vorzugsweise sind der Ring (15) und das Reservoir (3) aus Polyethylenterephthalat hergestellt.

9. Verfahren nach einem der Ansprüche 1 bis 8, **dadurch gekennzeichnet, dass** das zentrale Element ein Rohr (9) ist und der Behälter (1) ferner Dichtungsmittel (37) umfasst, die so angeordnet sind, dass sie das Rohr (9) an seinem unteren Ende verschließen, so dass das im Behälter (1) enthaltene Produkt sowohl im Behälter (3) als auch im Rohr (9) gelagert wird; und/oder
dass die Scheibe (13) eine untere Fläche aufweist, die innerhalb des Rings (15) angeordnet ist und
- die Unterseite der Scheibe (13) ein oder mehrere Sicherungsmittel (39) aufweist, oder
- eine Dichtungsscheibe an der Unterseite der Scheibe (13) befestigt ist.

10. Verfahren nach einem der Ansprüche 1 bis 9, wobei der Behälter eine Kartusche ist, die geeignet ist, mit dem Hals eines Behälters zusammenzuwirken, um es einem in dem Behälter (1) enthaltenen Produkt zu ermöglichen, in den Behälter zu fließen; **dadurch gekennzeichnet, dass** das zentrale Element ein Rohr (9) ist und der Behälter (1) ferner bewegliche Dichtungsmittel (37) umfasst, die angeordnet sind, um das Rohr (9) an seinem unteren Ende zu verschließen, wobei die beweglichen Dichtungsmittel (37) einen zylindrischen Körper (43) mit einer oberen und einer unteren Öffnung und eine oder mehrere Klappen (41) umfassen, die die untere Öffnung des zylindrischen Körpers (43) verschließen, wobei der zylindrische Körper (43) so dimensioniert ist, dass er das Rohr (9) umgibt und daran zwischen einer Schließ- und einer Öffnungsposition gleitet, wobei in der Öffnungsposition die eine oder mehreren Klappen (41) durch den Druck geöffnet werden, der durch das Rohr (9) auf die Klappen (41) ausgeübt wird; vorzugsweise sind eine oder mehrere Klappen (41) mit dem zylindrischen Körper (43) verbunden.

11. Verfahren nach Anspruch 9 oder 10, **dadurch gekennzeichnet, dass** das bewegliche Dichtungsmittel (37) mindestens einen Kragen (45, 47) umfasst, der an der Außenseite des zylindrischen Körpers (43) angeordnet und so konfiguriert ist, dass er mit dem Hals (51) eines Behälters zusammenwirkt, um zu ermöglichen, dass das bewegliche Dichtungsmittel (37) durch einen Druck, der durch den Hals (51) des Behälters auf den Kragen (45, 47) ausgeübt wird, der das Öffnen der einen oder mehreren Klappen (41) bewirkt, entlang des Rohrs (9) gleitet, und dass mindestens ein Kragen (45, 47) des beweglichen Dichtungsmittels (37) Haltenasen (49) umfasst, die so konfiguriert sind, dass sie mit dem inneren Relief (25) der Fassung (11) zusammenwirken, um das bewegliche Dichtungsmittel (37) in Position innerhalb der Fassung (11) zu halten und das Rohr (9) zu schließen.

12. Verfahren nach einem der Ansprüche 10 bis 11, **dadurch gekennzeichnet, dass** das bewegliche Dichtungsmittel (37) zwei Kragen (45, 47) umfasst, die entlang des zylindrischen Körpers (43) verteilt sind, um einen unteren Kragen (45) und einen oberen Kragen (47) zu zeigen, wobei der untere Kragen (45) so angeordnet ist, dass er mit dem Hals (51) des Behälters zusammenwirkt, und/oder wobei der obere Kragen (47) des beweglichen Dichtungsmittels (37) Haltenasen (49) umfasst, die so konfiguriert sind, dass sie mit dem Innengewinde (25) der Fassung (11) zusammenwirken, um das bewegliche Dichtungsmittel (25) in Position innerhalb der Fassung (11) zu halten und das Rohr (9) zu schließen; und/oder dadurch, dass die Fassung (11) eine untere Öffnung aufweist, die dimensioniert ist, um den Hals (51) des Behälters aufzunehmen, wobei die untere Öffnung einen Innendurchmesser aufweist, der größer als der Außendurchmesser des einen oder der mehreren Kragen (45, 47) des beweglichen Dichtungsmittels (37) ist.

13. Verfahren nach einem der Ansprüche 10 bis 12, **dadurch gekennzeichnet**, dassdie beweglichen Dichtungsmittel (37)
- eine Vielzahl von Klappen umfasst, wobei jede Klappe mindestens eine Seite gemeinsam mit einer benachbarten Klappe aufweist und deren Distalende einen Verbindungspunkt oder eine Verbindungslinie mit der Vielzahl von Klappen bildet, und dass das untere Ende des Rohrs (9) angeordnet ist, um einen Druck auf das proximale Ende auf die Klappen auszuüben, um sie zu öffnen, wenn die beweglichen Dichtungsmittel entlang des Rohrs (9) gleiten; oder
- eine einzelne Klappe (41), wobei die Klappe (41) mit dem zylindrischen Körper (43) oder einem Kragen (45, 47) durch eine zerbrechliche Zone verbunden ist, die einen Bruchumfang definiert, der geeignet ist, durch einen Druck, der durch das untere Ende des Rohrs (9) ausgeübt wird, zerbrochen zu werden, um es zu öffnen, wenn das bewegliche Mittel entlang des Rohrs (9) gleitet, dadurch, dass die Anordnung, die durch die Klappe (41) und eine oder mehrere, die aus dem zylindrischen Körper (43) und einem oder mehreren Kragen (45, 47) ausgewählt sind, in einem Stück gebildet ist; und dadurch, dass die zerbrechliche Zone ein Abschnitt der Klappe mit einer reduzierten Dicke ist; vorzugsweise ist die Klappe ferner mit einem Kragen (45, 47) durch mindestens ein Scharnier (55) in Form eines Beins verbunden, das einen Abschnitt mit zusätzlicher Dicke zeigt.

14. Verfahren nach einem der Ansprüche 1 bis 13, wobei der Behälter (1) ein Container ist, der geeignet ist, mit dem Hals (63) einer Kartusche (59) zusammenzuwirken; **dadurch gekennzeichnet, dass** das zentrale Element eine Klinge (57) ist, die geeignet ist, die Dichtungsmittel der Kartusche (59) zu schneiden, oder ein Sporn, der geeignet ist, die Dichtungsmittel der Kartusche (59) zu drücken, um zu ermöglichen, dass ein in der Kartusche (59) enthaltenes Produkt in den Container ausfließt; wobei das zentrale Element vorzugsweise eine Klinge (57) ist und die Klinge aus einem Meißel, einer Fase (57) oder einem Rohr mit einer abgeschrägten oder verdrehten Form ausgewählt ist.

## Revendications

1. Procédé de moulage par injection-soufflage ou de moulage par injection-étirage-soufflage d'un article ; le procédé comprenant une étape de moulage par injection d'une préforme (17) sur une broche de noyau suivie d'une étape de moulage par soufflage ou de moulage par étirage-soufflage de ladite préforme (17) ; dans lequel l'article est un récipient (1) qui est un article moulé par soufflage comprenant :
- un réservoir (3), le réservoir (3) ayant une paroi de fond (5) comprenant une ouverture (7) ;
- un élément central (9, 57) disposé au niveau de l'ouverture (7) du réservoir (3) ;
- une douille (11) disposée de façon à entourer l'élément central (9, 57) ;
dans lequel la douille (11) et l'élément central (9, 57) présentent une extrémité inférieure et une extrémité supérieure, et sont reliés par leurs extrémités supérieures respectives au moyen d'un disque (13) avec une ouverture centrale, dans lequel l'ensemble comprenant la douille (11), l'élément central (9, 57) et le disque (13) forme un anneau (15) qui se présente en une seule pièce ; dans lequel au moins une partie de la paroi de fond (5) du réservoir est disposée de sorte à faire face au disque (13) ; dans lequel l'anneau (15) et le réservoir (3) se présentent également en une seule pièce de sorte que le réservoir est fixé de manière irréversible à l'anneau (15) ;
dans lequel la douille (11) présente un relief interne (25) qui est un filetage interne ; et en ce que l'étape de moulage par soufflage ou par étirage-soufflage de la préforme (17) est suivie d'une étape de dévissage de l'article de la broche de noyau effectuée avant une étape d'éjection dudit article ;
le réservoir a une seule ouverture (7) qui est l'ouverture (7) de la paroi de fond.

2. Procédé selon la revendication 1, **caractérisé en ce qu'**au moins une partie de la paroi de fond (5) du réservoir est fixée de manière irréversible à l'anneau (15) par soudage sur la face supérieure du disque (13) de sorte que le récipient (1) présente une ligne de soudure sur sa surface externe ; et/ou **en ce que** le procédé comprend une étape de soudage du réservoir à l'anneau et où l'étape de moulage par soufflage ou de moulage par étirage-soufflage de la préforme (17) pour former un article et l'étape de soudage du réservoir à l'anneau sont effectuées simultanément.

3. Procédé selon la revendication 1 ou 2, **caractérisé en ce que** l'anneau (15) présente un ou plusieurs reliefs de maintien (27, 29, 31) ; de préférence, la surface externe de l'élément central (9, 57) fait face à au moins un relief interne (25) de la douille (11) et dans lequel au moins un relief interne (25) de la douille (11) est différent du ou des reliefs de maintien (27, 29, 31) de l'anneau (15).

4. Procédé selon l'une quelconque des revendications 1 à 3, **caractérisé en ce que** l'anneau (15) présente un ou plusieurs reliefs de maintien (27, 29, 31) et le ou les reliefs de maintien (27, 29, 31) sont choisis parmi un ou plusieurs méplats sur la surface externe de la douille (11) ; une ou plusieurs rainures ou nervures s'étendant le long de la longueur de la douille (11) et placées sur la surface externe de la douille (11) ; une ou plusieurs pattes sur la surface interne du tube (9) lorsque l'élément central est un tube (9) ; une ou plusieurs rainures ou nervures s'étendant sur la longueur du tube (9) et placées sur la surface interne du tube (9) lorsque l'élément central est un tube (9) ; un ou plusieurs crans dans l'épaisseur de l'extrémité inférieure de la douille (11) et/ou dans l'épaisseur de l'extrémité inférieure du tube (9) lorsque l'élément central est un tube (9), un créneau de l'extrémité inférieure de la douille (11) et/ou de l'extrémité inférieure du tube (9) lorsque l'élément central est un tube (9).

5. Procédé selon l'une quelconque des revendications 1 à 4, **caractérisé en ce que** le réservoir (3) a une paroi ayant une épaisseur d'au plus 1,0 mm ; de préférence, d'au plus 0,9 mm ; encore plus préférable, d'au plus 0,8 mm.

6. Procédé selon la revendication 5, **caractérisé en ce que** le réservoir (3) est entouré d'un boîtier constitué d'une ou plusieurs matières qui peuvent être identiques ou différentes de la matière constituant l'anneau (15) ; de préférence, la ou les matières du boîtier sont choisies parmi la matière plastique, le métal, le bois, le verre, le carton, le papier ou tout mélange de ceux-ci.

7. Procédé selon l'une quelconque des revendications 1 à 6, **caractérisé en ce que** le réservoir (3) est dimensionné pour avoir une largeur supérieure au diamètre de l'ouverture (7) et/ou **en ce que** l'élément central est un tube (9) et l'extrémité inférieure du tube (9)
- présente une forme biseautée ou torsadée de sorte que le tube (9) présente une variation de longueur ; ou
- est droite de sorte que le tube (9) ne présente aucune variation de longueur.

8. Procédé selon l'une quelconque des revendications 1 à 7, **caractérisé en ce que** l'anneau (15) et le réservoir (3) sont réalisés en matière plastique
- comprenant au moins 30 % en poids de résine post-consommation par rapport au poids total de la matière plastique ; et/ou
- étant une matière thermoplastique choisie parmi le polyéthylène, le polypropylène, le polystyrène, le polylactide et tout mélange de ceux-ci, ou étant un ou plusieurs polyesters ; de préférence, l'anneau (15) et le réservoir (3) sont réalisés en polyéthylène téréphtalate.

9. Procédé selon l'une quelconque des revendications 1 à 8, **caractérisé en ce que** l'élément central est un tube (9) et le récipient (1) comprend en outre des moyens d'étanchéité (37) disposés de façon à fermer le tube (9) à son extrémité inférieure de sorte que le produit contenu dans le récipient (1) est stocké à la fois dans le réservoir (3) et dans le tube (9) : et/ou
**en ce que** le disque (13) a une face inférieure disposée à l'intérieur de l'anneau (15) et
- la face inférieure du disque (13) présente un ou plusieurs moyens de fixation (39), ou
- une rondelle d'étanchéité est fixée sur la face inférieure du disque (13).

10. Procédé selon l'une quelconque des revendications 1 à 9, dans lequel le récipient est une cartouche qui est appropriée pour coopérer avec le col d'un contenant pour permettre à un produit contenu dans le récipient (1) de s'écouler dans ledit contenant ; **caractérisé en ce que** l'élément central est un tube (9) et le récipient (1) comprend en outre des moyens d'étanchéité mobiles (37) disposés de façon à fermer le tube (9) à son extrémité inférieure, les moyens d'étanchéité mobiles (37) comprenant un corps cylindrique (43) avec une ouverture supérieure et une ouverture inférieure, et un ou plusieurs rabats (41) fermant l'ouverture inférieure du corps cylindrique (43), dans lequel ledit corps cylindrique (43) est dimensionné pour entourer le tube (9) et pour coulisser le long de celui-ci entre une position de fermeture et une position d'ouverture, dans lequel dans la position d'ouverture, le ou les rabats (41) sont ouverts par la pression exercée par le tube (9) sur lesdits rabats (41) ; de préférence, un ou plusieurs rabats (41) sont reliés au corps cylindrique (43).

11. Procédé selon la revendication 9 ou 10, **caractérisé en ce que** le moyen d'étanchéité mobile (37) comprend au moins un collier (45, 47) disposé sur le côté externe du corps cylindrique (43) et configuré pour coopérer avec le col (51) d'un contenant pour permettre au moyen d'étanchéité mobile (37) de coulisser le long du tube (9) par une pression exercée sur ledit collier (45, 47) par le col (51) du contenant provoquant l'ouverture du ou des rabats (41) et **en ce qu'**au moins un collier (45, 47) du moyen d'étanchéité mobile (37) comprend des pattes de maintien (49) configurées pour coopérer avec le relief interne (25) de la douille (11) pour maintenir le moyen d'étanchéité mobile (37) en position à l'intérieur de la douille (11), fermant le tube (9).

12. Procédé selon l'une quelconque des revendications 10 à 11, **caractérisé en ce que** le moyen d'étanchéité mobile (37) comprend deux colliers (45, 47) répartis le long du corps cylindrique (43) pour présenter un collier inférieur (45) et un collier supérieur (47) dans lequel le collier inférieur (45) est celui disposé de façon à coopérer avec le col (51) du contenant et/ou dans lequel le collier supérieur (47) du moyen d'étanchéité mobile (37) comprend des pattes de maintien (49) configurées pour coopérer avec le filetage interne (25) de la douille (11) pour maintenir le moyen d'étanchéité mobile (25) en position à l'intérieur de la douille (11), fermant le tube (9) ; et/ou **en ce que** la douille (11) présente une ouverture inférieure dimensionnée pour recevoir le col (51) du contenant, dans lequel l'ouverture inférieure a un diamètre interne supérieur au diamètre externe du ou des colliers (45, 47) du moyen d'étanchéité mobile (37).

13. Procédé selon l'une quelconque des revendications 10 à 12, **caractérisé en ce que** les moyens d'étanchéité mobiles (37) comprennent
- une pluralité de rabats, chaque rabat ayant au moins un côté en commun avec un rabat adjacent et dont l'extrémité distale forme un point de jonction ou une ligne de jonction avec ladite pluralité de rabats et **en ce que** l'extrémité inférieure du tube (9) est disposée de façon à exercer une pression sur l'extrémité proximale des rabats pour les ouvrir lorsque les moyens d'étanchéité mobiles coulissent le long du tube (9) ; ou
- un seul rabat (41), dans lequel le rabat (41) est relié au corps cylindrique (43) ou à un collier (45, 47) par une zone frangible définissant un périmètre de rupture, apte à être rompu par une pression exercée par l'extrémité inférieure du tube (9) pour l'ouvrir lorsque les moyens mobiles coulissent le long dudit tube (9), **en ce que** l'ensemble formé par le rabat (41) et un ou plusieurs choisis parmi le corps cylindrique (43) et un ou plusieurs colliers (45, 47) se présentent en une seule pièce ; et **en ce que** la zone frangible est une portion du rabat ayant une épaisseur réduite ; de préférence, le rabat est en outre relié à un collier (45, 47) par au moins une charnière (55) en forme de jambe présentant une partie en surépaisseur.

14. Procédé selon l'une quelconque des revendications 1 à 13, dans lequel le récipient (1) est un contenant qui est adapté pour coopérer avec le col (63) d'une cartouche (59) ; **caractérisé en ce que** l'élément central est une lame (57) apte à couper les moyens d'étanchéité de la cartouche (59), ou un ergot apte à pousser les moyens d'étanchéité de la cartouche (59) pour permettre à un produit contenu dans la cartouche (59) de s'écouler dans ledit contenant ; de préférence, l'élément central est une lame (57) et la lame est sélectionnée parmi un pic, un biseau (57) ou un tube avec une forme biseautée ou torsadée.
